# EUROPÄISCHE PATENTSCHRIFT

(11) **EP 1 012 003 B1**
(45) Veröffentlichungstag und Bekanntmachung des Hinweises auf die Patenterteilung: **20.02.2002**
(21) Anmeldenummer: 98945057.2
(22) Anmeldetag: 29.07.1998
(51) Int. Cl.: B60R 21/00, B60R 16/02

(54) **VERFAHREN UND VORRICHTUNG ZUR STEUERUNG DER DATENÜBERTRAGUNG ZWISCHEN ZWEI IN EINEM KRAFTFAHRZEUG VORHANDENEN MODULEN**
METHOD AND DEVICE FOR CONTROLLING DATA TRANSMISSION BETWEEN TWO MODULES LOCATED IN A MOTOR VEHICLE
PROCEDE ET DISPOSITIF POUR COMMANDER LA TRANSMISSION DE DONNEES ENTRE DEUX MODULES PRESENTS DANS UN VEHICULE A MOTEUR

(30) Priorität: 10.09.1997 DE 19739808
(43) Veröffentlichungstag der Anmeldung: 28.06.2000
(73) Patentinhaber: SIEMENS AKTIENGESELLSCHAFT, 80333 München (DE)
(72) Erfinder: SWART, Marten, D-93083 Obertraubling (DE); ANTHOFER, Anton, D-92271 Freihung (DE)
(86) Internationale Anmeldenummer: DE9802155
(87) Internationale Veröffentlichungsnummer: WO9912771

(56) Entgegenhaltungen:
- EP-A- 0 471 871
- EP-A- 0 486 186
- EP-A- 0 576 018
- DE-A- 3 811 217
- DE-A- 4 209 140

## Beschreibung

Die Erfindung betrifft ein Verfahren und eine Vorrichtung zur Steuerung der Datenübertragung zwischen zwei in einem Kraftfahrzeug vorhandenen Modulen, insbesondere zwischen einem Steuergerät und einer Aktivierungsschaltung eines Insassenschutzsystems.

Die Erfindung geht von einem Verfahren gemäß dem Oberbegriff des Patentanspruchs 1 und einer Vorrichtung gemäß dem Oberbegriff des Patentanspruchs 7 aus, wie sie zum Beispiel aus der DE 3 811 217 A1 bzw. im wesentlichen aus der EP 0 471 871 A1 bekannt sind. Die bekannte Vorrichtung ist als Insassenschutzsystem mit zentralem Steuergerät und ausgelagerten Zündschaltungen ausgebildet, wobei das Steuergerät und die Zündschaltungen über einen Kommunikationsbus miteinander verbunden sind. Bei einem durch Sensoren erfaßten Aufprall (Crash) gibt das zentrale Steuergerät Zündbefehle, zum Beispiel in Form von Codewörtern, an eine oder mehrere Zündschaltungen ab. Der Einsatz von Codewörtern bringt (gegenüber dem einfachen Aufprägen eines positiven Potentials auf der vom Steuergerät zur betreffenden Zündschaltung führenden Datenleitung) den Vorteil, daß verhindert wird, daß ein eventueller unbeabsichtigter Kurzschluß der Datenleitung mit der Batteriespannung zu einem unerwünschten Auslösen des Insassenschutzgeräts, zum Beispiel des Airbags oder des Gurtstrammers, führt.

Allgemein gilt hierbei, daß zunehmend statt einer parallelen Verdrahtung serielle Multiplex-Kommunikationsbusse (zum Beispiel in der Regel CAN in Kraftfahrzeugen, ein Squibbus für die Zündpillenansteuerung, ein Instabus usw.) zum Datenaustausch und zur Kommunikation zwischen den einzelnen Modulen im Kraftfahrzeug eingesetzt werden. Für die Datenübertragung ist häufig ein Microcontroller vorhanden, der die Daten auf der Basis der anliegenden Eingangsgrößen, zum Beispiel von Prozeßparametern oder Sensorsignalen, zusammenstellt und über den Multiplex-Kommunikationsbus an andere Module/Geräte abgibt.

Bei Verwendung eines Kommunikationsbusses wird dieser üblicherweise über eine Hardware-Kommunikationsschnittstelle angesteuert, die zum Beispiel als Schieberegister ausgebildet sein kann und durch eine Steuereinrichtung, insbesondere in Form eines Microcontrollers, gesteuert wird.

Besonders wichtige und sicherheitskritische Eingangsdaten werden hierbei in der Regel durch redundante Sensoren abgesichert, so daß sich Sensorenpaare aus eigentlichem Sensor und zugehörigem Safing-Sensor ergeben. Insbesondere bei Insassenschutzsystemen wird zur Vermeidung einer fehlerhaften Auslösung zusätzlich zu dem eigentlichen Sensor, zum Beispiel dem Beschleunigungssensor, ein weiterer, redundanter Sensor (Safing-Sensor), zum Beispiel in Form eines mechanischen Beschleunigungsschalters oder eines weiteren Beschleunigungssensors, vorgesehen, der lediglich dann anspricht, wenn ein Mindestwert der zu erfassenden Größe, d.h. eine Mindestbeschleunigung, auftritt. Das die Erzeugung des Aktivierungssignals, zum Beispiel eines Airbag-Zündsignals, steuernde Steuergerät erzeugt dieses Aktivierungssignal lediglich dann, wenn beide Sensoren einen Aufprall anzeigen. Das Steuergerät führt somit eine UND-Verknüpfung der beiden Sensorsignale durch.

Generell stellt sich hierbei das Problem, die Kommunikation gegen Fehler abzusichern. Die Datenübertragung selbst läßt sich durch entsprechende Protokollgestaltung, insbesondere durch Hinzufügung von Fehlererkennungscodes, Redundanz-Bits und dergleichen absichern, so daß bei der Datenübertragung eventuell aufgetretene Fehler empfängerseitig erkannt werden können und das übertragene Codewort folglich verworfen wird.

Wenn jedoch der Microcontroller selbst aufgrund interner Fehlfunktionen, die durch Hardware-Fehler oder durch Software-Fehler bedingt sein können, das zu übertragende und durch einen Fehlererkennungscode gesicherte Informationspaket fehlerhaft erzeugt, können diese Fehler in aller Regel nicht erkannt werden. Selbst dann, wenn dem Microcontroller nicht nur das eigentliche Sensorsignal, sondern auch das Signal des zusätzlichen redundanten Sensors zugeführt wird, besteht die Gefahr, daß der Microcontroller bei interner Fehlfunktion ein fehlerhaftes Aktivierungssignal erzeugt, d.h. es besteht die Gefahr, daß ein nicht erforderliches Zündsignal auf den Bus gelegt wird, obwohl kein Gefahrenzustand vorliegt.

Zum verbesserten Schutz gegenüber solchen Fehlfunktionen könnte überlegt werden, mindestens einen weiteren, redundanten Microcontroller vorzusehen, und nur dann ein Zündsignal weiterzuleiten, wenn alle Microcontroller dieses Zündsignal identisch erzeugen. Dieser Lösungsansatz ist aber sehr aufwendig und auch technisch nur mit Schwierigkeiten zu realisieren.

Der Erfindung liegt die Aufgabe zugrunde, ein Verfahren und eine Vorrichtung zur Steuerung der Datenübertragung zwischen zwei in einem Kraftfahrzeug vorhandenen Modulen zu schaffen, das bezichungsweise die erhöhte Sicherheit gegenüber der Übertragung von fehlerhaften Aktivierungssignalen bietet.

Diese Aufgabe wird mit den im Patentanspruch 1 bezichungsweise 7 genannten Maß-nahmen und Merkmalen gelöst.

Vorteilhafte Ausgestaltungen der Erfindung sind in den Unteransprüchen angegeben.

Bei der vorliegenden Erfindung werden somit nicht nur das von dem einen Modul, insbesondere dem zentralen Steuergerät, gebildete Codewort, sondern auch eines der beiden Sensorsignale an die Kommunikationsschnittstelle angelegt. In der Kommunikationsschnittstelle ist somit eine Überprüfung und/oder Änderung zumindest eines Teils des Codeworts noch vor seiner Übertragung möglich. Wenn zum Beispiel das an die Kommunikationsschnittstelle angelegte Sensorsignal keine Aktivierungsnotwendigkeit angibt, im zu übertragenden Codewort aber eine Aktivierung signalisiert wird, kann der entsprechende Informationsabschnitt, der aus einem oder mehreren Bits bestehen kann, entsprechend geändert werden. Wenn die Kommunikationsschnittstelle zum Beispiel ein Schieberegister enthält, in das das Codewort vor seiner Übertragung eingeschrieben wird, müssen lediglich diejenigen Schieberegister-Stellen betrachtet werden, in denen der die Aktivierung oder fehlende Aktivierung befehlende Informationsabschnitt des Codeworts steht. Wenn das an die Kommunikationsschnittstelle angelegte Sensorsignal die Notwendigkeit einer Aktivierung signalisiert und im Codewort zutreffend ebenfalls eine solche Aktivierung befohlen wird, ist keine Änderung des Codeworts notwendig. Gleiches gilt, wenn das Codewort keine Aktivierung signalisiert. Auch in diesem Fall kann das Codewort unverändert bleiben, da dann offensichtlich das andere Sensorsignal, das bei der Bildung des Codeworts ausgewertet wurde, keinen Gefahrenzustand anzeigte.

Wenn das an die Kommunikationsschnittstelle angelegte Sensorsignal demgegenüber die fehlende Notwendigkeit einer Aktivierung signalisiert, kann diese Information dazu verwendet werden, eine in dem Codewort eventuell vorhandene, eine Aktivierung befehlende Information umzucodieren, so daß das dann übertragene Codewort keine Aktivierung mehr befiehlt.

Wenn als Beispiel im einfachsten Fall im Codewort ein Bit das Aktivierungssignal, zum Beispiel ein Zündsignal, repräsentiert, das an einer bestimmten Stelle im Schieberegister steht, kann dann, wenn das an die Kommunikationsschnittstelle geführte Sensorsignal eine "1" (Aktivierung) signalisiert, das entsprechende Bit in dem Schieberegister unverändert belassen werden, während dann, wenn das an die Kommunikationsschnittstelle angelegte Sensorsignal eine "0" (keine Aktivierung) signalisiert, die entsprechende Schieberegisterstelle auf diesen Wert eingestellt wird, unabhängig davon, ob bislang eine "1" oder eine "0" an dieser Stelle stand.

Sofern das Codewort mit einem zusätzlichen Fehlererkennungscode versehen ist, kann die vorstehend erläuterte Vorgehensweise noch weiter dadurch vereinfacht werden, daß das Aktivierungssignal-Bit des Codeworts stets durch den Bitwert des an die Kommunikationsschnittstelle angelegten Sensorsignals überschrieben wird. Wenn der Pegel des bislang im Codewort stehenden Bits dem Wert des an die Kommunikationsstelle angelegten Sensorsignals entspricht, bleibt die entsprechende Bitposition unverändert, so daß auch der Fehlererkennungscode weiterhin zutrifft und das adressierte Modul die Information auswerten kann. Wenn aber der bisherige Bitwert des Aktivierungsbits im Codewort einen anderen Wert als das an die Kommunikationsschnittstelle angelegte Sensorsignal aufweist, wird die entsprechende Bitposition umgeschrieben, so daß der Fehlererkennungscode nicht länger für diesen geänderten Bitabschnitt zutrifft. Das adressierte Gerät erkennt diese Diskrepanz zwischen dem Datenwort und dem zugeordneten Fehlererkennungscode und kann somit das Datenwort als fehlerhaft verwerfen.

Wenn das zu übertragende Codewort eine Aktivierung signalisiert, das an die Kommunikationsschnittstelle angelegte Sensorsignale jedoch keine Notwendigkeit einer Aktivierung anzeigt, ist es erfindungsgemäß auch möglich, das Codewort an anderer Bitstelle als beim Aktivierungsabschnitt gezielt zu stören, d.h. einen oder mehrere Bitwerte zu ändern. Empfängerseitig wird dann ebenfalls eine Diskrepanz zwischen Informationsabschnitt und dem Fehlererkennungscode erkannt und kein Zündvorgang ausgeführt.

Bei der Erfindung wird somit die bislang bei der Generierung des Codeworts durchgeführte UND-Verknüpfung der beiden Sensorsignale an eine nach dem Codewortgenerator (üblicherweise Microcontroller) liegende Stelle möglichst nahe an den Kommunikationsbus gelegt, nämlich in der Kommunikationsschnittstelle realisiert.

Die Erfindung ermöglicht somit in einfacher Weise eine Erhöhung der Sicherheit gegenüber unerwünschten Aktivierungssignalen, ohne daß hoher Codierungs-/Decodierungsaufwand notwendig wäre. Der komplette Fehlererkennungscode-Algorithmus (CRC-Algorithmus) des das Codewort generierenden Microcontrollers muß nämlich nicht in der Kommunikationsschnittstelle nachgebildet werden, da der Fehlererkennungscode in der Kommunikationsschnittstelle unverändert beibehalten werden kann. Ferner wird bei der Erfindung eine Kommunikations-Safingfunktion realisiert, bei der lediglich auf einen Teil der Codewörter (Protokoll-Frames) zugegriffen wird, so daß die Kommunikationsschnittstelle für alle anderen Kommandos und Signale, bei denen das oder die Aktivierungssignal-Bits beliebigen Wert haben können, transparent bleibt. Die Kommunikation wird somit nicht beeinträchtigt.

Die Module können Bestandteil eines Insassenschutzsystems sein, das als Airbag-System, Gurtstraffer-System, Überrollschutzbügel-System oder dergleichen ausgebildet ist und bei dem die Aktivierung der Zündpillen oder der sonstigen Steuerorgane gesteuert wird. Die Erfindung ist aber auch bei beliebigen anderen Systemen anwendbar, bei denen zwei oder mehr Sensoren zur Messung des gleichen Parameters vorgesehen sind und die Sensorsignale zur Festlegung des Aktivierungssignals miteinander verknüpft werden.

Die Erfindung wird nachstehend anhand eines Ausführungsbeispiels näher beschrieben. Es zeigt:
- Fig. 1: ein Ausführungsbeispiel der erfindungsgemäßen Vorrichtung mit mehreren, über einen Kommunikationsbus miteinander verbundenen Modulen, und
- Fig. 2: den Aufbau und die Zusammensetzung eines Codeworts (Protokoll-Frame).

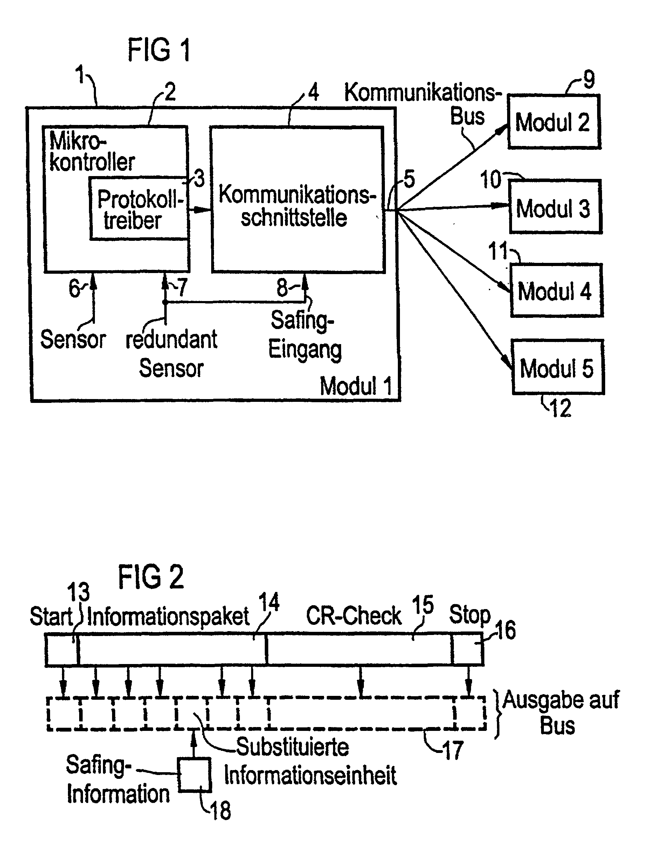

Bei dem in Fig. 1 gezeigten Ausführungsbeispiel ist ein Modul 1 vorhanden, das ein zentrales Steuergerät eines Insassenschutzsystems, insbesondere eines Airbag- und/oder Gurtstraffer-Systems, ist und über einen Kommunikationsbus 5 mit weiteren Modulen (Zündgeräten) 9, 10, 11 und 12 in Kommunikationsverbindung steht. Das Modul 1 enthält einen Microcontroller 2, an den mindestens ein Sensorsignal 6 angelegt ist, das von einem Sensor, insbesondere Beschleunigungssensor, erzeugt wird. An den Microcontroller 2 kann zusätzlich auch noch ein weiteres, den gleichen Parameter repräsentierendes Sensorsignal 7 eines weiteren Sensors (Safing-Sensor), insbesondere eines Beschleunigungssensors oder Beschleunigungsschalters angelegt werden, wobei der Microcontroller 2 in diesem Fall eine UND-Verknüpfung der beiden Sensorsignale zur Bildung des Aktivierungssignals, insbesondere des Zündsignals, durchführt. Die Zuführung des zweiten Sensorsignals, d.h. der Safing-Sensordaten oder der Haupt-Sensordaten, kann aber auch unterbleiben. In jedem Fall bildet der Microcontroller 2 dann, wenn das oder die Sensorsignale 6, 7 einen Aufprall anzeigen, ein Codewort, das eine Aktivierung der Zündpillen des Insassenschutzsystems bewirken soll. Dieses Codewort wird einschließlich eines Fehlererkennungscodes über einen Protokolltreiber 3 des Microcontrollers 2 an eine Kommunikationsschnittstelle 4 des Moduls 1 angelegt, die ausgangsseitig mit dem seriellen Multiplex-Kommunikationsbus 5 verbunden ist. Die Kommunikationsschnittstelle 4 weist einen zusätzlichen Eingang (Safing-Eingang) 8 auf, an den das Sensorsignal 7 des redundanten Sensors, oder alternativ das Sensorsignal 6, angelegt ist.

Wie bereits angegeben, erzeugt der Microcontroller 2 aus den Sensorsignalen 6, und gegebenenfalls zusätzlich den Daten des redundanten (Safing) Sensors, ein Informationspaket 14 (siehe Fig. 2). Zur Absicherung der Kommunikation wird, wie bereits erläutert, im Microcontroller 2 die CRC-Prüfsumme 15 (siehe Fig. 2) berechnet und an das Informationspaket 14 angehängt. Zur Vervollständigung eines vollständigen Protokollframes fügt der Microcontroller 2 noch Startdaten 13 und Stoppdaten 16 an, und überträgt dann dieses komplette Codewort (Protokollframe) zur Kommunikationsschnittstelle 4. Die Kommunikationsschnittstelle 4 hat die Aufgabe, diese logischen Signale in die physikalischen Signale des Busses umzusetzen. Der zusätzliche Eingang 8 der Kommunikationsschnittstelle 4 dient zur Protokollabsicherung und wirkt auf einzelne Informationseinheiten des Protokollframes 13 bis 16, vorzugsweise auf ein oder mehrere Bits (Informationseinheiten) des Informationspakets 14, ein. Die Struktur des Informationspakets 14 ist nämlich in der Regel einfacher zu entschlüsseln als die meist komplexe CRC-Prüfsumme 15, so daß die logische Verarbeitung in der Kommunikationsschnittstelle 4 vereinfacht ist.

Wenn der Microcontroller 2 korrekt arbeitet, weist das Informationspaket 14 abhängig von der zu übertragenden Nutzinformation, d.h. von dem Sensorsignal 6 (und/oder 7) ein bestimmtes Muster auf. Da das an den Eingang 8 der Kommunikations-schnittstelle 4 angelegte Sensorsignal 7 (oder 6) die gleiche Parametergröße repräsentiert und sich für die gleiche physikalische Eingangsgröße die gleiche, äquivalente Ausgangsgröße einstellt, ergibt sich bei korrekter Arbeitsweise der gleiche Informationsgehalt, d.h. es kann das Muster des Informationspakets, soweit dies durch das Sensorsignal bedingt ist, auch direkt durch das an die Kommunikationsschnittstelle 4 angelegte Sensorsignal erzeugt werden. Es ist in diesem Fall somit möglich, den entsprechenden Teil (ein oder mehrere Bits) des Informationspakets 14 ganz oder teilweise durch das über den Eingang 8 direkt eingespeiste Sensorsignal zu ersetzen, ohne daß die innere Richtigkeit des gesamten Protokollframes 13 bis 16 verlorengeht.

In Fig. 2 ist dieser Sachverhalt schematisch dargestellt. Aus dem Codewort (Protokollframe) 13 bis 16 wird ein zur Ausgabe auf den Kommunikationsbus 5 ausgelegtes Codewort 17 gebildet, dessen Bitstellen mit denjenigen des Codeworts 13 bis 16 identisch sind, mit der Ausnahme einer substituierten Informationseinheit, die durch eine Safing-Information 18 gebildet wird. Diese Information 18 kann dem Zündbefehl entsprechen und wird durch das an den Eingang 8 angelegte Sensorsignal, gegebenenfalls nach interner Umsetzung, repräsentiert.

Sollte der Microcontroller 2 allerdings falsch arbeiten und somit ein unkorrektes Informationspaket 14 erzeugen, zu dem die zugehörige CRC-Prüfsumme 15 gebildet wird, unterscheiden sich die das Aktivierungssignal repräsentierende Information im Informationspaket 14 einerseits und die Safinginformation 18 andererseits, so daß die Konsistenz des Codeworts 13 bis 16 gestört wird, da das gesendete Informationspaket und die zugehörige CRC-Prüfsumme 15 nicht mehr zusammenpassen. Jeder das Codewort empfangende Empfänger erkennt diese fehlende Übereinstimmung zwischen Informationspaket 14 und CRC-Prüfsumme 15 und kann somit das gesamte Codewort als fehlerhaft verwerfen, d.h. führt den eigentlich vorgegebenen Befehl nicht aus. Gegebenenfalls kann ein Empfänger (Modul 9, 10, 11 oder 12), der diese Fehlerhaftigkeit des Codeworts feststellt, auch ein Fehlersignal erzeugen, das an das zentrale Steuergerät 1 rückgemeldet oder in einer sonstigen Weise verarbeitet, zum Beispiel in einer Fehlertabelle gespeichert wird.

Die Größe der substituierten Informationseinheit kann ein Bit umfassen, jedoch auch mehrere Bits enthalten. Ferner ist es möglich, durch geeigneten Aufbau des Informationspakets 14 und geeignete Wahl der substituierten Informationseinheiten zusätzlich zu erreichen, daß nicht nur einzelne Informationspakete korrelieren müssen, sondern daß auch Gruppen von Informationspaketen zu Gruppen von Safinginformationen konsistente Codewörter (Protokollframes) ergeben.

Bei der Erfindung wird somit die durch die Redundanz bewirkte Sicherungsfunktion (Safing-Funktion) ohne großen Hardwareaufwand in der Kommunikationsschnittstelle implementiert.

## Patentansprüche

1. Verfahren zum Steuern der Datenübertragung zwischen zwei in einem Kraftfahrzeug vorhandenen Modulen (1, 9, 10, 11, 12), insbesondere zwischen einem Steuergerät (1) und mindestens einem Zündgerät (9, 10, 11, 12) eines Kraftfahrzeug-Insassenschutzsystems, wobei die Module über eine Kommunikationsschnittstelle (4) und einen Kommunikationsbus (5) miteinander verbunden sind und in einem der Module (1) die in Form von Codewörtern (13 bis 16) zu übertragenden Daten in Abhängigkeit von Sensorsignalen (6, 7) festgelegt von einem und an die Kommunikationsschnittstelle (4) des einen Moduls angelegt werden, und wobei die Sensorsignale (6, 7) ersten Sensor und einem zweiten, als redundanter Sensor vorhandenen Sensor erzeugt werden, **dadurch gekennzeichnet, daß** das Sensorsignal (6, 7) eines der beiden Sensoren an die Kommunikationsschnittstelle (4) des einen Moduls (1) angelegt wird und zur Überprüfung und/oder Änderung eines Teils des an die Kommunikationsschnittstelle (4) zur Übertragung angelegten Codeworts (13 bis 16) ausgewertet wird.

2. Verfahren nach Anspruch 1, **dadurch gekennzeichnet, daß** das an die Kommunikationsschnittstelle (4) angelegte Sensorsignal als ein binäres Signal ausgelegt wird, dessen Wert mit einem die Aktivierung des zweiten Moduls (9, 10, 11, 12) steuernden Informationsabschnitt (14) des Codeworts (13 bis 16) verglichen wird, und daß der Informationsabschnitt oder ein anderer Teil des Codeworts bei Abweichungen zwischen diesen Werten in der Kommunikationsschnittstelle (4) umcodiert wird.

3. Verfahren nach Anspruch 1, **dadurch gekennzeichnet, daß** das an die Kommunikationsschnittstelle (4) angelegte Sensorsignal als binäres Signal ausgelegt wird und ein die Aktivierung des zweiten Moduls (9, 10, 11, 12) steuernder Informationsabschnitt (14) des Codeworts (13 bis 16) jeweils durch dieses Sensorsignal ersetzt wird.

4. Verfahren nach Anspruch 2 oder 3, **dadurch gekennzeichnet, daß** das an die Kommunikationsschnittstelle angelegte Sensorsignal derart ausgelegt wird, daß es ein einziges Bit enthält.

5. Verfahren nach einem der Ansprüche 1 bis 4, **dadurch gekennzeichnet, daß** dem Codewort (13 bis 16) ein Fehlererkennungscode (15) beigefügt wird, der selbst bei Änderung eines Informationsabschnitts (14) des Codeworts (13 bis 16) nicht verändert wird, und daß das zweite Modul mit einer Fehlererkennungsfunktion ausgestattet wird.

6. Verfahren nach einem der vorhergehenden Ansprüche, **dadurch gekennzeichnet, daß** das Insassenschutzsystem ein System, insbesondere Airbag-System, mit zentralem Steuergerät (1) als einem Modul und ausgelagerten Zündschaltungen als weiteren Modulen ist, und daß das Codewort mit einem Aktivierungsbit zum Steuern der Aktivierung mindestens einer der Zündschaltungen versehen wird.

7. Vorrichtung zum Steuern der Datenübertragung zwischen einem ersten und einem zweiten, in einem Kraftfahrzeug vorhandenen Modul (1, 9, 10, 11, 12), insbesondere zwischen einem Steuergerät und einem Zündgerät eines Insassenschutzsystems, mit einem die beiden Module verbindenden Kommunikationsbus (5), der über eine Kommunikations-Schnittstelle (4) des ersten Moduls (1) an dieses angeschlossen ist, wobei das erste Modul (1) die zum zweiten Modul in Form von Codewörtern zu übertragenden Daten in Abhängigkeit von Sensorsignalen (6, 7) eines ersten und/oder eines zweiten, als redundanter Sensor vorgesehenen Sensors festlegt und an die Kommunikationsschnittstelle (4) abgibt, **dadurch gekennzeichnet, daß** die Kommunikationsschnittstelle (4) mit einem Eingang (8) versehen ist, an den das von dem ersten oder dem zweiten Sensor erzeugte Sensorsignal (6, 7) angelegt ist, und weiterhin eine Einrichtung aufweist, durch die ein Teil des Codeworts in Abhängigkeit von dem an die Kommunikationsschnittstelle (4) angelegten Sensorsignal änderbar ist.

8. Vorrichtung nach Anspruch 7, **dadurch gekennzeichnet, daß** die Codewörter einen Informationsabschnitt (14) und einen Fehlererkennungscode (15) enthalten und die Steuereinrichtung zur Codewortänderung nur auf den Informationsabschnitt zugreift.

9. Vorrichtung nach Anspruch 7 oder 8, **dadurch gekennzeichnet, daß** das erste Modul (1) einen Microcontroller (2) zur Erzeugung der Codewörter enthält, der mit einem oder mit beiden Sensoren verbunden ist.

10. Vorrichtung nach einem der Ansprüche 7 bis 9, **dadurch gekennzeichnet, daß** das Insassenschutzsystem ein System, insbesondere Airbag-System, mit zentralem Steuergerät (1) und ausgelagerten Zündgeräten (9, 10, 11, 12) ist, und daß das Codewort ein Aktivierungsbit zum Steuern der Aktivierung mindestens eines der Zündgeräte enthält.

## Claims

1. Method of controlling the transmission of data between two modules (1, 9, 10, 11, 12) present in a motor vehicle, in particular between a control unit (1) and at least one firing unit (9, 10, 11, 12) of a motor vehicle occupant protection system, the modules being interconnected via a communication interface (4) and a communication bus (5) and the data to be transmitted in the form of code words (13 to 16) as a function of sensor signals (6, 7) being defined in one of the modules (1) and applied to the communication interface (4) of said module, and the sensor signals (6, 7) being generated by a first sensor and a second redundantly present sensor, **characterised in that** the sensor signal (6, 7) of one of the two sensors is applied to the communication interface (4) of the said module (1) and evaluated for checking and/or modifying part of the code word (13 to 16) applied to the communication interface (4) for transmission.

2. Method according to Claim 1, **characterised in that** the sensor signal applied to the communication interface (4) is designed as a binary signal whose value is compared with an information section (14) of the code word (13 to 16), said section controlling the activation of the second module (9, 10, 11, 12), and that the information section or another part of the code word is recoded in the communication interface (4) in the event of discrepancies between these values.

3. Method according to Claim 1, **characterised in that** the sensor signal applied to the communication interface (4) is designed as a binary signal and an information section (14) of the code word (13 to 16), said section controlling the activation of the second module (9, 10, 11, 12), is substituted by this sensor signal in each case.

4. Method according to either of Claims 2 and 3, **characterised in that** the sensor signal applied to the communication interface is designed such that it contains a single bit.

5. Method according to one of Claims 1 to 4, **characterised in that** an error-detecting code (15) is added to the code word (13 to 16), said error-detecting code remaining unchanged even if an information section (14) of the code word (13 to 16) is modified, and that the second module is equipped with an error-detecting function.

6. Method according to any of the preceding claims, **characterised in that** the occupant protection system is a system, in particular an airbag system, having a central control unit (1) as one module and distributed firing circuits as other modules, and that the code word is provided with an activation bit for controlling the activation of at least one of the firing circuits.

7. Arrangement for controlling the transmission of data between a first and a second in-vehicle module (1, 9, 10, 11, 12), in particular between a control unit and a firing unit of an occupant protection system, the two modules being interconnected via a communication bus (5) which is connected to the first module (1) via the communication interface (4) of the first module (1), said module defining the data to be transmitted to the second module in the form of code words as a function of sensor signals (6, 7) of a first and/or a second redundantly present sensor and applying said data to the communication interface (4), **characterised in that** said communication interface (4) is provided with an input (8) to which the sensor signal (6, 7) generated by the first or the second sensor is applied, and moreover having a facility whereby part of the code word can be modified as a function of the sensor signal applied to the communication interface (4).

8. Arrangement according to Claim 7, **characterised in that** the code words contain an information section (14) and an error-detecting code (15) and the control facility for modifying the code word only accesses the information section.

9. Arrangement according to Claims 7 and 8, **characterised in that** the first module (1) contains a microcontroller (2) for generating the code words which is connected to one or both sensors.

10. Arrangement according to one of Claims 7 to 9, **characterised in that** the occupant protection system is a system, in particular an airbag system, having a central control unit (1) and distributed firing units (9, 10, 11, 12), and that the code word is provided with an activation bit for controlling the activation of at least one of the firing units.

## Revendications

1. Procédé de commande de la transmission de données entre deux modules (1, 9, 10, 11, 12) présents dans un véhicule automobile, notamment entre un dispositif de commande (1) et au moins un dispositif d'allumage (9, 10, 11, 12) d'un dispositif de protection d'occupant de véhicule automobile, les modules étant reliés entre eux au moyen d'une interface de communication (4) et d'un bus de communication (5) et, dans un premier des modules (1), les données à transmettre sous forma de mots codés (13 à 16) sont établies en fonction de signaux de capteur (6, 7) et appliquées à l'interface de communication (4) du premier module, les signaux de capteur (6, 7) étant produits par un premier capteur et un second capteur prévus en tant que capteur redondant, **caractérisé en ce que** le signal de capteur (6, 7) de l'un des deux capteurs est appliqué à l'interface de communication (4) du premier module (1) et est analysé pour la vérification et/ou la modification d'une partie du mot codé (13 à 16) appliqué à l'interface de communication (4) en vue de la transmission.

2. Procédé suivant la revendication 1, **caractérisé en ce que** le signal de capteur appliqué à l'interface de communication (4) est conçu sous forme d'un signal binaire dont la valeur est comparée à une section d'information (14), du mot codé (13 à 16), qui commande l'activation du second module (9, 10, 11, 12) et **en ce qu'**en cas d'écart entre ces valeurs, la section d'information ou une autre partie du mot codé est transcodée dans l'interface de communication (4).

3. Procédé suivant la revendication 1, **caractérisé en ce que** le signal de capteur appliqué à l'interface de communication (4) est conçu sous forma d'un signal binaire et **en ce qu'**une section d'information (14) du mot codé (13 à 16), qui commande l'activation du second module (9, 10, 11, 12) est chaque fois remplacée par ce signal de capteur.

4. Procédé suivant la revendication 2 ou 3, **caractérisé en ce que** le signal de capteur appliqué à l'interface de communication est conçu d'une manière telle qu'il contient un bit unique.

5. Procédé suivant l'une des revendications 1 à 4, **caractérisé en ce qu'**au mot codé (13 à 16), il est adjoint un code de reconnaissance d'erreur (15) qui n'est pas lui-même modifié dans le cas d'une modification d'une section d'information (14) du mot codé (13 à 16) et **en ce que** le second module est pourvu d'une fonction de reconnaissance d'erreur.

6. Procédé suivant l'une des revendications précédentes, **caractérisé en ce que** le dispositif de protection d'occupant est un dispositif, notamment un dispositif de sac gonflable de protection, comportant un dispositif de commande central (1), constituant un module, et des circuits d'allumage disposés d'une manière dispersée constituant d'autres modules, et **en ce que** le mot codé comportant un bit d'activation est prévu pour commander l'activation d'au moins l'un des circuits d'allumage.

7. Dispositif de commande de la transmission de données entre un premier et un second modules (1, 9, 10, 11, 12) existant dans un véhicule automobile, notamment entre un dispositif de commande et un dispositif d'allumage d'un dispositif de protection d'occupant, comprenant un bus de communication (5) qui relie les deux modules et qui est relié au premier module (1) par l'intermédiaire d'une interface de communication (4) de celui-ci, tandis qu'en fonction de signaux de capteur (6, 7) d'un premier capteur et/ou d'un second capteur prévu(s) en tant que capteur redondant, le premier module (1) établit les données à transmettre au second module sous forme de mots codés et les délivre à l'interface de communication (4), **caractérisé en ce que** l'interface de communication (4) est pourvue d'une entrée (8), sur laquelle le signal de capteur (6, 7) produit par le premier ou le second capteur est appliqué, et comprend en outre des moyens à l'aide desquels une partie du mot codé peut être modifié en fonction du signal de capteur appliqué à l'interface de communication (4).

8. Dispositif suivant la revendication 7, **caractérisé en ce que** les mots codés contiennent une section d'information (14) et un code de reconnaissance d'erreur (15) et le dispositif de commande n'a accès, en vue de la modification du mot codé, qu'à la section d'information.

9. Dispositif suivant la revendication 7 ou 8, **caractérisé en ce que** le premier module (1) contient un micro-contrôleur (2) qui sert à produire les mots codés et qui est relié à un capteur ou aux deux capteurs.

10. Dispositif suivant l'une des revendications 7 à 9, **caractérisé en ce que** le dispositif de protection d'occupant est un dispositif, notamment un dispositif de sac gonflable de protection, comportant un dispositif de commande central (1) et des dispositifs d'allumage (9, 10, 11, 12) disposés dune manière dispersée, et **en ce que** le mot codé contient un bit d'activation pour la commande de l'activation d'au moins l'un des dispositifs d'allumage.
